# EUROPEAN PATENT APPLICATION

(11) **EP 4 435 502 A1**
(43) Date of publication of application: **25.09.2024**
(21) Application number: 23759017.9
(22) Date of filing: 08.02.2023
(51) Int. Cl.: G02F 1/03

(54) **ELECTRO-OPTICAL MODULATOR**

(30) Priority: 25.02.2022 CN 202210179793
(71) Applicant: Suzhou Lycore Technologies Co., Ltd., Suzhou, Jiangsu 215123 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: Reddie & Grose LLP
(86) International application number: PCT/CN2023/074961
(87) International publication number: WO 2023/160392

(57) **Abstract**

An electro-optic modulator is provided, including: a light splitting element; a light combining element; a first waveguide arm and a second waveguide arm that are arranged in parallel and are connected between the light splitting element and the light combining element; and a first ground electrode, a first signal electrode, a second ground electrode, a second signal electrode, and a third ground electrode that are arranged in sequence, where the first waveguide arm is located between the first ground electrode and the first signal electrode, the second waveguide arm is located between the second ground electrode and the second signal electrode, and the first signal electrode and the second signal electrode are configured to receive differential signals. A technical solution of an embodiment of the present disclosure can improve working performance of the electro-optic modulator.

## Description

### CROSS-REFERENCE TO RELATED APPLICATION

The present application claims priority of the invention patent application No. 202210179793.2, filed on February 25, 2022, and entitled "ELECTRO-OPTIC MODULATOR", and the disclosure of the priority claimed by the present application is incorporated herein by reference in its entirety.

### TECHNICAL FIELD

The present disclosure relates to the technical field of optical communications, and in particular, to an electro-optic modulator.

### BACKGROUND ART

In recent years, with rapid development of emerging network application services such as Internet of Things, driverless, telemedicine, and distance education, higher requirements have been put forward for high-speed and large-capacity communication technology. Optical communications have achieved rapid development in the direction of high-speed and large-capacity communications due to their characteristics such as a large bandwidth, high reliability, a low cost and a strong anti-interference ability. How to load high-speed electrical signals onto optical carriers is a core research content.

An electro-optic modulator is a modulator that is made based on an electro-optic effect of electro-optic materials. The electro-optic effect means that when a voltage is applied to an electro-optic material such as a lithium niobate crystal, a gallium arsenide crystal, or a lithium tantalate crystal, a refractive index of the electro-optic material will vary, resulting in a change in characteristics of light waves passing through the electro-optic material. The use of the electro-optic effect allows modulation of parameters, such as the phase, amplitude, intensity and polarization state, of optical signals.

With increasingly urgent requirements for the high-speed and large-capacity communication technology, higher requirements have been put forward for working performance of the electro-optic modulator.

### SUMMARY OF THE INVENTION

An embodiment of the present disclosure provides an electro-optic modulator, including: a light splitting element; a light combining element; a first waveguide arm and a second waveguide arm that are arranged in parallel and are connected between the light splitting element and the light combining element; and a first ground electrode, a first signal electrode, a second ground electrode, a second signal electrode, and a third ground electrode that are arranged in sequence, where the first signal electrode and the second signal electrode are configured to receive differential signals, the first waveguide arm is located between the first ground electrode and the first signal electrode, and the second waveguide arm is located between the second ground electrode and the second signal electrode.

In some embodiments, the electro-optic modulator further includes: a first independent waveguide section and a second independent waveguide section that are arranged in parallel with the first waveguide arm and the second waveguide arm, where the first independent waveguide section is located between the first signal electrode and the second ground electrode, and the second independent waveguide section is located between the second signal electrode and the third ground electrode.

In some embodiments, the electro-optic modulator includes a substrate, an isolation layer, a waveguide layer, and an electrode layer that are arranged in sequence, where the first waveguide arm and the second waveguide arm are located in the waveguide layer; and the first ground electrode, the first signal electrode, the second ground electrode, the second signal electrode, and the third ground electrode are located in the electrode layer.

In some embodiments, the first signal electrode and the second signal electrode each include a first main electrode with a distance of h1 from the substrate, and the first ground electrode, the second ground electrode, and the third ground electrode each include a second main electrode with a distance of h2 from the substrate, where h1 ≠ h2.

In some embodiments, the electro-optic modulator further includes a dielectric layer located between the waveguide layer and the electrode layer, and a dielectric constant of the dielectric layer is less than that of the waveguide layer, where the waveguide layer includes a flat plate layer and a ridged layer located at a side of the flat plate layer away from the substrate, the first waveguide arm and the second waveguide arm are located in the ridged layer, the first main electrode is formed on a surface of a side of the dielectric layer away from the substrate, and the second main electrode is formed on a surface of a side of the flat plate layer away from the substrate.

In some embodiments, the electro-optic modulator further includes a dielectric layer located between the waveguide layer and the electrode layer, and a dielectric constant of the dielectric layer is less than that of the waveguide layer, where the waveguide layer is a ridged pattern layer, the first main electrode is formed on a surface of a side of the dielectric layer away from the substrate, and the second main electrode is formed on a surface of a side of the isolation layer away from the substrate.

In some embodiments, each of the first signal electrode and the second signal electrode further includes a first extension electrode correspondingly connected to the respective first main electrode.

In some embodiments, each of the first ground electrode, the second ground electrode, and the third ground electrode further includes a second extension electrode correspondingly connected to the respective second main electrode.

In some embodiments, each of the first signal electrode and the second signal electrode further includes a first extension electrode correspondingly connected to the respective first main electrode, where the first extension electrode is a surface-shaped extension electrode with the same extension direction as the first main electrode, or the first extension electrode includes a plurality of first sub-electrodes arranged at intervals in the extension direction of the first main electrode; and each of the first ground electrode, the second ground electrode, and the third ground electrode further includes a second extension electrode correspondingly connected to the respective second main electrode, where the second extension electrode is a surface-shaped extension electrode with the same extension direction as the second main electrode, or the second extension electrode includes a plurality of second sub-electrodes arranged at intervals in the extension direction of the second main electrode, where at least a part of the first extension electrode and at least a part of the second extension electrode are located in the same plane.

In some embodiments, the waveguide layer includes a flat plate layer and a ridged layer located at a side of the flat plate layer away from the substrate, the first waveguide arm and the second waveguide arm are located in the ridged layer, and at least a part of the first extension electrode and at least a part of the second extension electrode are formed on a surface of a side of the flat plate layer away from the substrate.

In some embodiments, the waveguide layer is a ridged pattern layer, and at least a part of the first extension electrode and at least a part of the second extension electrode are formed on a surface of a side of the isolation layer away from the substrate.

In some embodiments, the first ground electrode includes one second extension electrode, which is arranged at a side of the first ground electrode close to the first signal electrode; the first signal electrode includes two first extension electrodes, which are distributed at two sides of the first signal electrode; the second ground electrode includes two second extension electrodes, which are distributed at two sides of the second ground electrode; the second signal electrode includes two first extension electrodes, which are distributed at two sides of the second signal electrode; and the third ground electrode includes one second extension electrode, which is arranged at a side of the third ground electrode close to the second signal electrode.

In some embodiments, the waveguide layer includes a flat plate layer and a ridged layer located at a side of the flat plate layer away from the substrate, where the first waveguide arm and the second waveguide arm are located in the ridged layer, and the first main electrode or the second main electrode penetrates the flat plate layer and is in contact with the isolation layer.

In some embodiments, the electro-optic modulator further includes a dielectric layer located between the waveguide layer and the electrode layer, where a dielectric constant of the dielectric layer is less than that of the waveguide layer, and the dielectric layer covers the first waveguide arm and the second waveguide arm.

These and other aspects of the present disclosure will be clear from the embodiments described below, and will be clarified with reference to the embodiments described below.

### BRIEF DESCRIPTION OF THE DRAWINGS

More details, features, and advantages of the present disclosure are disclosed in the following description of exemplary embodiments with reference to the accompanying drawings, in which:
FIG. 1 is a schematic structural diagram of a conventional electro-optic modulator in the related art;
FIG. 2 is a schematic structural diagram of an electro-optic modulator according to some exemplary embodiments of the present disclosure;
FIG. 3 is a schematic structural diagram of an electro-optic modulator according to some other exemplary embodiments of the present disclosure;
FIG. 4 is a schematic structural sectional view of an electro-optic modulator according to some exemplary embodiments of the present disclosure; and
FIG. 5 is a schematic structural sectional view of an electro-optic modulator according to some exemplary embodiments of the present disclosure.

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered as illustrative in nature, and not as restrictive.

Electro-optic modulation related technologies have been widely developed and applied in the fields of optical communications, microwave photonics, laser beam deflection, wavefront modulation, etc. A Mach-Zehnder modulator is one type of electro-optic modulator, in which an input optical signal is equally split into two branch optical signals, which then enter two waveguide arms, respectively. The two waveguide arms are made of an electro-optic material and have a refractive index changing with an applied modulation voltage. The change in the refractive index of the waveguide arms may lead to a change in phases of the branch optical signals. Therefore, an output from the convergence of the two branch optical signals is an interference signal with an intensity changing with the modulation voltage. In brief, the Mach-Zehnder modulator can implement modulation of different sidebands by controlling the modulation voltage applied to the two waveguide arms. As a device for converting electrical signals into optical signals, the Mach-Zehnder modulator is one of the common core devices in optical interconnection, optical computing and optical communication systems.

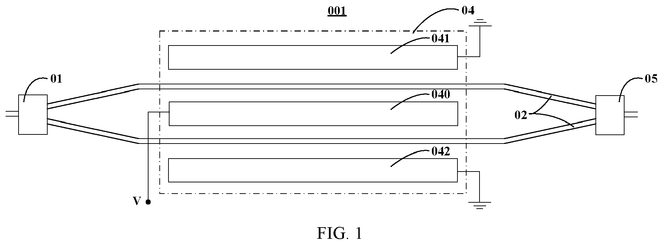

As shown in FIG. 1, which shows a schematic structural diagram of a conventional Mach-Zehnder modulator. Ideally, the Mach-Zehnder modulator 001 has two waveguide arms 02 that are strictly identical to each other. When the Mach-Zehnder modulator 001 is not working, neither of the two waveguide arms 02 undergoes an electro-optic effect. Input light passes through a light splitting element 01 and is then equally split into two branch optical signals. The two branch optical signals are still in the same phase after respectively passing through the corresponding waveguide arms 02, and then a coherently enhanced signal for the two branch optical signals will be output from a light combining element 05. When the Mach-Zehnder modulator 001 is working, a modulating electrode 04 (for example, including a signal electrode 040, a first ground electrode 041, and a second ground electrode 042) applies a modulation voltage to the two waveguide arms 02, and the two branch optical signals may differ in phase by an odd or even multiple of Π after each of the two branch optical signals passes through one waveguide arm 02. When the two branch optical signals differ in phase by an even multiple of Π, the light combining element 05 outputs a coherently enhanced signal for the two branch optical signals. When the two branch optical signals differ in phase by an odd multiple of Π, the light combining element 05 outputs a coherent cancellation signal for the two branch optical signals.

In the electro-optic modulator, a transmission speed of the electrical signals is mainly affected by a dielectric constant and structure of a material, and a transmission speed of the optical signals is mainly affected by the refractive index and structure of the material. Electro-optic modulators in the related art are made of an electro-optic material with a relatively small refractive index and a relatively large dielectric constant, which leads to a high transmission speed of the optical signals and a low transmission speed of the electrical signals, making it difficult to achieve a better match between the transmission speeds of the two, thus resulting in a relatively large transmission loss of the electro-optic modulator and a sub-optimal working performance of the device.

In view of this, an embodiment of the present disclosure provides an electro-optic modulator, to reduce a transmission loss of the electro-optic modulator, and thus improve working performance of the electro-optic modulator.

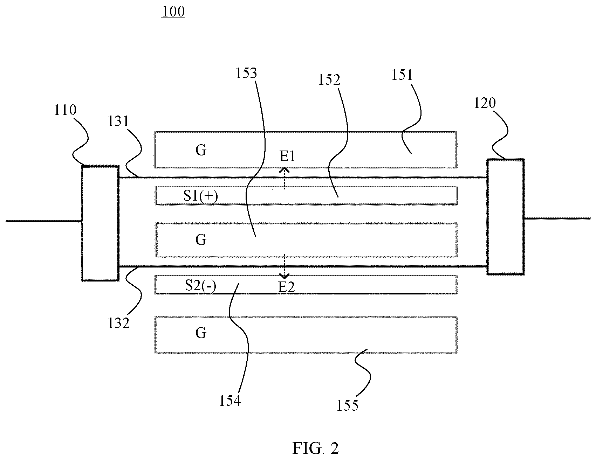

As shown in FIG. 2, an electro-optic modulator 100 provided according to some embodiments of the present disclosure includes a light splitting element 110; a light combining element 120; a first waveguide arm 131 and a second waveguide arm 132 that are arranged in parallel; and a first ground electrode 151, a first signal electrode 152, a second ground electrode 153, a second signal electrode 154, and a third ground electrode 155 that are arranged in sequence. The first signal electrode 152 and the second signal electrode 154 are configured to receive differential signals. The first waveguide arm 131 and the second waveguide arm 132 are connected between the light splitting element 110 and the light combining element 120. Moreover, the first waveguide arm 131 is located between the first ground electrode 151 and the first signal electrode 152, and the second waveguide arm 132 is located between the second ground electrode 153 and the second signal electrode 154.

The light splitting element 110 is not specifically limited in type, at least includes one input port and two output ports, and for example, may be a light splitting element with one input and two outputs. The light combining element 120 is not specifically limited in type, at least includes two input ports and one output port, and for example, may be a light combining element with two inputs and one output or a light combining element with two inputs and three outputs, etc.. The first waveguide arm 131 is connected between one output port of the light splitting element 110 and one input port of the light combining element 120, and the second waveguide arm 132 is connected between the other output port of the light splitting element 110 and the other input port of the light combining element 120.

The first ground electrode 151, the first signal electrode 152, the second ground electrode 153, the second signal electrode 154, and the third ground electrode 155 are arranged side by side, and for example, are arranged in parallel. The first signal electrode 152 and the second signal electrode 154 are configured to receive differential signals. That is, the first signal electrode 152 and the second signal electrode 154 respectively receive radio frequency voltage signals S1 and S2 that are of the same amplitude and opposite phases, and the radio frequency voltage signals S1 and S2 are differential signals.

The materials of the first waveguide arm 131 and the second waveguide arm 132 include an electro-optic material, such as lithium niobate, lithium tantalate or potassium titanyl phosphate. When differential signals (such as the radio frequency voltage signals S1 and S2 described above) are input into the first signal electrode 152 and the second signal electrode 154, and the first ground electrode 151, the second ground electrode 153, and the third ground electrode 155 are grounded, the first waveguide arm 131 is located in an electric field E1 between the first signal electrode 152 and the first ground electrode 151, and the second waveguide arm 132 is located in an electric field E2 between the second signal electrode 154 and the second ground electrode 153. A direction of the electric field E1 is opposite to that of the electric field E2. The refractive index of the first waveguide arm 131 and the refractive index of the second waveguide arm 132 vary with the differential signals S1 and S2 received by the first signal electrode 152 and the second signal electrode 154, allowing the phases of the branch optical signals transmitted therein to be modulated, such that the two branch optical signals achieve a target phase difference when arriving at the light combining element 120. The target phase difference is, for example, an odd or even multiple of Π.

In an embodiment of the present disclosure, the second ground electrode 153 is arranged between the first signal electrode 152 and the second signal electrode 154, such that crosstalk that may be generated between the two signal electrodes can be shielded or reduced. Compared with a conventional electro-optic modulator, the first signal electrode 152 and the second signal electrode 154 are independent of each other and are relatively far away from each other, which is also beneficial to reducing the crosstalk that may be generated between the two signal electrodes. The first signal electrode 152 is located between the first ground electrode 151 and the second ground electrode 153, and the second signal electrode 154 is located between the second ground electrode 153 and the third ground electrode 155, which can shield or reduce the crosstalk that may be caused to the signal electrodes by factors other than this group of electrodes. After the crosstalk is reduced, the stability of electrical signal transmission is increased, so that a transmission loss of the device is reduced, thus increasing accuracy and stability of a modulation output of the electro-optic modulator 100 and improving working performance.

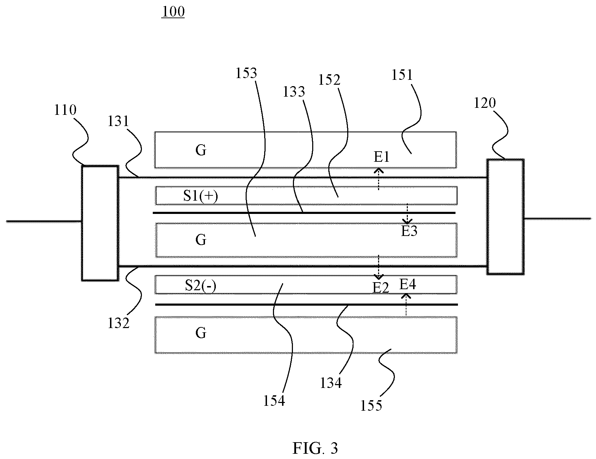

As shown in FIG. 3, in some embodiments of the present disclosure, the electro-optic modulator 100 further includes a first independent waveguide section 133 and a second independent waveguide section 134 that are arranged in parallel with the first waveguide arm 131 and the second waveguide arm 132, where the first independent waveguide section 133 is located between the first signal electrode 152 and the second ground electrode 153, and the second independent waveguide section 134 is located between the second signal electrode 154 and the third ground electrode 155.

The first independent waveguide section 133 and the second independent waveguide section 134 differ from the first waveguide arm 131 and the second waveguide arm 132 mainly in that the first independent waveguide section and the second independent waveguide section are not connected to other elements and are not configured to transmit optical signals. The first independent waveguide section 133 is positioned in an electric field E3 between the first signal electrode 152 and the second ground electrode 153, and the second independent waveguide section 134 is positioned in an electric field E4 between the second signal electrode 154 and the third ground electrode 155. With the arrangement of the independent waveguide sections, effects of electric fields at two sides of the signal electrodes can be balanced. For example, the electric field E1 acts on the first waveguide arm 131, and the electric field E3 is opposite to the electric field E1 in direction and acts on the first independent waveguide section 133. Although the first independent waveguide section 133 is not configured to transmit optical signals, the first independent waveguide section makes the effects of the electric fields E1 and E3 symmetrical, which can make the transmission of electrical signals of the two signal electrodes more stable, thus being beneficial to further reducing the transmission loss of the device.

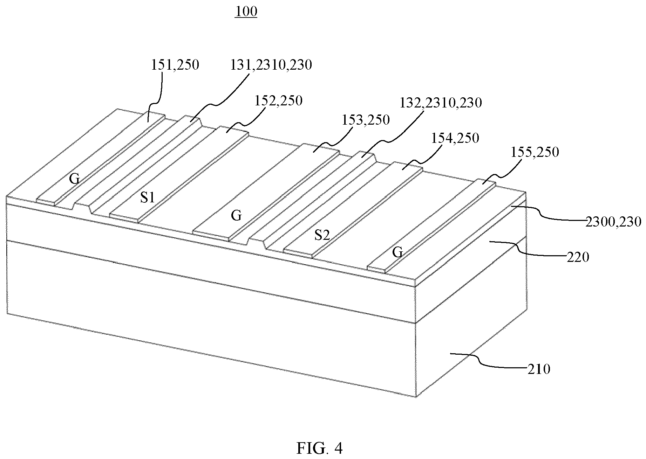

The specific structural form of the electro-optic modulator 100 is not limited. As shown in FIG. 4, in some embodiments, the electro-optic modulator 100 includes a substrate 210, an isolation layer 220, a waveguide layer 230, and an electrode layer 250 that are arranged in sequence, where the first waveguide arm 131 and the second waveguide arm 132 are located in the waveguide layer 230, and the first ground electrode 151, the first signal electrode 152, the second ground electrode 153, the second signal electrode 154, and the third ground electrode 155 are located in the electrode layer 250. In the embodiment including the first independent waveguide section 133 and the second independent waveguide section 134 mentioned above, the first independent waveguide section 133 and the second independent waveguide section 134 may alternatively be located in the waveguide layer 230 (not shown in the figure).

In an embodiment of the present disclosure, the waveguide layer 230 may be a ridge waveguide layer as shown in FIG. 4. The ridge waveguide layer includes a flat plate layer 2300 and a ridged layer 2310 located at a side of the flat plate layer 2300 away from the substrate 210. The flat plate layer 2300 and the ridged layer 2310 are of an integrated structure formed by etching, and the first waveguide arm 131 and the second waveguide arm 132 are located in the ridged layer 2310. The first independent waveguide section 133 and the second independent waveguide section 134 mentioned above may alternatively be located in the ridged layer 2310 (not shown in the figure). The first ground electrode 151, the first signal electrode 152, the second ground electrode 153, the second signal electrode 154, and the third ground electrode 155 are formed on a surface of a side of the flat plate layer 2300 away from the substrate 210, and are located in the same plane.

In some embodiments of the present disclosure, the waveguide layer may alternatively be a ridged pattern layer, that is, the waveguide layer includes no flat plate layer, and the first waveguide arm, the second waveguide arm, the first independent waveguide section, and the second independent waveguide section mentioned above may be directly formed on a surface of the isolation layer away from the substrate.

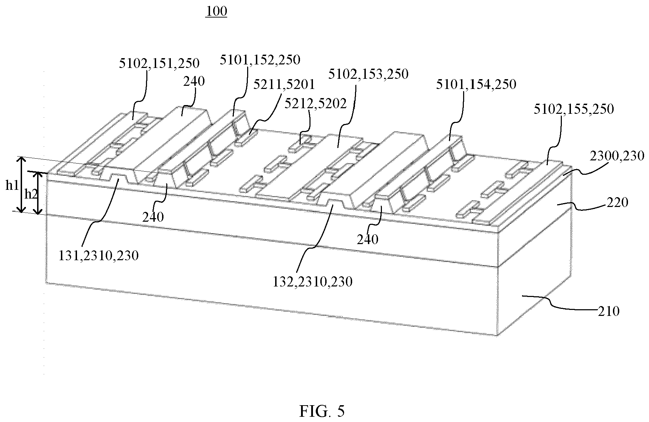

As shown in FIG. 5, in the electro-optic modulator 100 according to some embodiments of the present disclosure, the first signal electrode 152 and the second signal electrode 154 each include a first main electrode 5101 with a distance of h1 from the substrate 210, and the first ground electrode 151, the second ground electrode 153, and the third ground electrode 155 each include a second main electrode 5102 with a distance of h2 from the substrate 210, where h1 ≠ h2, and h1 > h2, or h1 < h2.

In this embodiment, the electro-optic modulator 100 further includes a dielectric layer 240 located between the waveguide layer 230 and the electrode layer 250, and a dielectric constant of the dielectric layer 240 is less than that of the waveguide layer 230. The dielectric layer 240 may cover the first waveguide arm 131 and the second waveguide arm 132 as shown in the figure. In addition, a height difference between the first main electrode 5101 and the second main electrode 5102 may be formed by means of a pattern design of the dielectric layer 240. For example, in this embodiment, the waveguide layer 230 includes a flat plate layer 2300 and a ridged layer 2310 located at a side of the flat plate layer 2300 away from the substrate 210, the first main electrode 5101 is formed on a surface of a side of the dielectric layer 240 away from the substrate 210, and the second main electrode 5102 is formed on a surface of a side of the flat plate layer 2300 away from the substrate 210. In some other embodiments, when the waveguide layer is a ridged pattern layer, the first main electrode is formed on a surface of a side of the dielectric layer away from the substrate, and the second main electrode is formed on a surface of a side of the isolation layer away from the substrate.

In some embodiments of the present disclosure, the height difference between the first main electrode and the second main electrode may alternatively be formed by means of a thickness difference of the flat plate layer of the waveguide layer in different regions. In this design, the electro-optic modulator may or may not include a dielectric layer.

In some embodiments, the waveguide layer includes a flat plate layer and a ridged layer located at a side of the flat plate layer away from the substrate, where the first waveguide arm and the second waveguide arm are located in the ridged layer, and the first main electrode or the second main electrode penetrates the flat plate layer and is in contact with the isolation layer. The height difference between the first main electrode and the second main electrode may also be implemented by means of this design.

In the embodiment of the present disclosure, the main electrodes (i.e., the first main electrodes 5101) of the first signal electrode 152 and the second signal electrode 154 are arranged at the same height, and the main electrodes (i.e., the second main electrodes 5102) of the first ground electrode 151, the second ground electrode 153, and the third ground electrode 155 are arranged at another height, which is beneficial to respective regulation of the signal electrodes and the ground electrodes, and makes regulation of electrical signal transmission more flexible and accurate, thereby reducing a difference in transmission speed between optical signals and electrical signals more easily and achieving good matching therebetween. When the first main electrode 5101 is properly away from the waveguide layer 230 with a large dielectric constant by means of the dielectric layer 240 with a small dielectric constant, a limitation of the electro-optic material on the transmission speed of electrical signals can be significantly reduced, so that an effect of speeding up the transmission of the electrical signals can be achieved.

In some embodiments, each of the first signal electrode 152 and the second signal electrode 154 of the electro-optic modulator 100 further includes a first extension electrode 5201 correspondingly connected to the respective first main electrode 5101; and/or each of the first ground electrode 151, the second ground electrode 153, and the third ground electrode 155 further includes a second extension electrode 5202 correspondingly connected to the respective second main electrode 5102.

As shown in FIG. 5, in some embodiments, each of the first signal electrode 152 and the second signal electrode 154 further includes a first extension electrode 5201 correspondingly connected to the respective first main electrode 5101, where the first extension electrode 5201 includes a plurality of first sub-electrodes 5211 (for example, T-shaped or L-shaped first sub-electrodes 5211) arranged at intervals in an extension direction of the first main electrode 5101. Each of the first ground electrode 151, the second ground electrode 153, and the third ground electrode 155 further includes a second extension electrode 5202 correspondingly connected to the respective second main electrode 5102, where the second extension electrode 5202 includes a plurality of second sub-electrodes 5212 (for example, T-shaped or L-shaped second sub-electrodes 5212) arranged at intervals in the extension direction of the second main electrode 5102. In this embodiment, at least a part of the first extension electrode 5201 and at least a part of the second extension electrode 5202 are located in the same plane.

The shapes of the first extension electrode 5201 and the second extension electrode 5202 are not limited to those shown in the figure. For example, each of the first extension electrode 5201 and the second extension electrode 5202 may alternatively be a surface-shaped extension electrode in the same extension direction as the respective main electrode.

As shown in FIG. 5, the first waveguide arm 131 and the second waveguide arm 132 are located in the ridged layer 2310, and at least a part of the first extension electrode 5201 and at least a part of the second extension electrode 5202 are formed on a surface of a side of the flat plate layer 2300 away from the substrate 210. Since the first main electrode 5101 is separated from the flat plate layer 2300 by the dielectric layer 240, the first main electrode 5101 is raised, and thus the first extension electrode 5201 further includes a climbing portion along an etching cross-section of the dielectric layer 240.

In some embodiments, when the waveguide layer is a ridged pattern layer, at least a part of the first extension electrode and at least a part of the second extension electrode are formed on a surface of a side of the isolation layer away from the substrate. Since the first main electrode is separated from the isolation layer by the dielectric layer, the first main electrode is raised, and thus the first extension electrode further includes a climbing portion along an etching cross-section of the dielectric layer.

In this embodiment, the first ground electrode 151 includes one second extension electrode 5202 (including a plurality of second sub-electrodes 5212) arranged at a side of the first ground electrode 151 close to the first signal electrode 152, and the first signal electrode 152 includes two first extension electrodes 5201 (each including a plurality of first sub-electrodes 5211) distributed at two sides of the first signal electrode 152. The second ground electrode 153 includes two second extension electrodes 5202 (each including a plurality of second sub-electrodes 5212) distributed at two sides of the second ground electrode 153, and the second signal electrode 154 includes two first extension electrodes 5201 (each including a plurality of first sub-electrodes 5211) distributed at two sides of the second signal electrode 154. The third ground electrode 155 includes one second extension electrode 5202 (including a plurality of second sub-electrodes 5212) arranged at a side of the third ground electrode 155 close to the second signal electrode 154. Only some sub-electrodes are shown by reference signs.

With the arrangement of the extension electrodes, intervals between the signal electrodes and the ground electrodes can be reduced, thus improving an electric field strength and reducing the transmission loss of electrical signals. In addition, some characteristics of the electrode structure (such as impedance and a transmission speed) are closely related to specific design parameters (such as a shape, a dimension, and the number) of the extension electrode. The design parameters of the extension electrode may be flexibly adjusted according to actual design requirements, so that the impedance of the electro-optic modulator 100 is as same as or close to that of the impedance at an input end thereof as possible, and the difference in transmission speeds of optical signals and electrical signals is compensated for to some extent, so that the transmission of the optical signals and the electrical signals can be matched as far as possible, thereby further improving performance of the electro-optic modulator 100.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case that the first feature is directly or obliquely above the second feature, or merely indicates that the first feature is at a higher level than the second feature. The first feature being "below", "under" or "beneath" the second feature includes the case that the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. An electro-optic modulator, comprising:
a light splitting element;
a light combining element;
a first waveguide arm and a second waveguide arm that are arranged in parallel and are connected between the light splitting element and the light combining element; and
a first ground electrode, a first signal electrode, a second ground electrode, a second signal electrode, and a third ground electrode that are arranged in sequence, wherein the first signal electrode and the second signal electrode are configured to receive differential signals, the first waveguide arm is located between the first ground electrode and the first signal electrode, and the second waveguide arm is located between the second ground electrode and the second signal electrode.

2. The electro-optic modulator according to claim 1, further comprising:
a first independent waveguide section and a second independent waveguide section that are arranged in parallel with the first waveguide arm and the second waveguide arm, respectively, wherein the first independent waveguide section is located between the first signal electrode and the second ground electrode, and the second independent waveguide section is located between the second signal electrode and the third ground electrode.

3. The electro-optic modulator according to claim 1, comprising a substrate, an isolation layer, a waveguide layer, and an electrode layer that are arranged in sequence, wherein
the first waveguide arm and the second waveguide arm are located in the waveguide layer; and
the first ground electrode, the first signal electrode, the second ground electrode, the second signal electrode, and the third ground electrode are located in the electrode layer.

4. The electro-optic modulator according to claim 3, wherein
the first signal electrode and the second signal electrode each comprise a first main electrode with a distance of h1 from the substrate, and the first ground electrode, the second ground electrode, and the third ground electrode each comprise a second main electrode with a distance of h2 from the substrate, wherein h1 ≠ h2.

5. The electro-optic modulator according to claim 4, further comprising a dielectric layer located between the waveguide layer and the electrode layer, a dielectric constant of the dielectric layer being less than that of the waveguide layer, wherein
the waveguide layer comprises a flat plate layer and a ridged layer located at a side of the flat plate layer away from the substrate, the first waveguide arm and the second waveguide arm are located in the ridged layer, the first main electrode is formed on a surface of a side of the dielectric layer away from the substrate, and the second main electrode is formed on a surface of the side of the flat plate layer away from the substrate.

6. The electro-optic modulator according to claim 4, further comprising a dielectric layer located between the waveguide layer and the electrode layer, a dielectric constant of the dielectric layer being less than that of the waveguide layer, wherein
the waveguide layer is a ridged pattern layer, the first main electrode is formed on a surface of a side of the dielectric layer away from the substrate, and the second main electrode is formed on a surface of a side of the isolation layer away from the substrate.

7. The electro-optic modulator according to claim 4, wherein
each of the first signal electrode and the second signal electrode further comprises a first extension electrode correspondingly connected to the respective first main electrode.

8. The electro-optic modulator according to claim 4, wherein
each of the first ground electrode, the second ground electrode, and the third ground electrode further comprises a second extension electrode correspondingly connected to the respective second main electrode.

9. The electro-optic modulator according to claim 4, wherein
each of the first signal electrode and the second signal electrode further comprises a first extension electrode correspondingly connected to the respective first main electrode, wherein the first extension electrode is a surface-shaped extension electrode with the same extension direction as the first main electrode, or the first extension electrode comprises a plurality of first sub-electrodes arranged at intervals in the extension direction of the first main electrode; and
each of the first ground electrode, the second ground electrode, and the third ground electrode further comprises a second extension electrode correspondingly connected to the respective second main electrode, wherein the second extension electrode is a surface-shaped extension electrode with the same extension direction as the second main electrode, or the second extension electrode comprises a plurality of second sub-electrodes arranged at intervals in the extension direction of the second main electrode,
wherein at least a part of the first extension electrode and at least a part of the second extension electrode are located in the same plane.

10. The electro-optic modulator according to claim 9, wherein
the waveguide layer comprises a flat plate layer and a ridged layer located at a side of the flat plate layer away from the substrate, the first waveguide arm and the second waveguide arm are located in the ridged layer, and at least a part of the first extension electrode and at least a part of the second extension electrode are formed on a surface of the side of the flat plate layer away from the substrate.

11. The electro-optic modulator according to claim 9, wherein
the waveguide layer is a ridged pattern layer, and at least a part of the first extension electrode and at least a part of the second extension electrode are formed on a surface of a side of the isolation layer away from the substrate.

12. The electro-optic modulator according to claim 9, wherein
the first ground electrode comprises one second extension electrode, which is arranged at a side of the first ground electrode close to the first signal electrode;
the first signal electrode comprises two first extension electrodes, which are distributed at two sides of the first signal electrode;
the second ground electrode comprises two second extension electrodes, which are distributed at two sides of the second ground electrode;
the second signal electrode comprises two first extension electrodes, which are distributed at two sides of the second signal electrode; and
the third ground electrode comprises one second extension electrode, which is arranged at a side of the third ground electrode close to the second signal electrode.

13. The electro-optic modulator according to claim 4, wherein
the waveguide layer comprises a flat plate layer and a ridged layer located at a side of the flat plate layer away from the substrate, wherein the first waveguide arm and the second waveguide arm are located in the ridged layer, and the first main electrode or the second main electrode penetrates the flat plate layer and is in contact with the isolation layer.

14. The electro-optic modulator according to any one of claims 3 to 13, further comprising a dielectric layer located between the waveguide layer and the electrode layer, wherein a dielectric constant of the dielectric layer is less than that of the waveguide layer, and the dielectric layer covers the first waveguide arm and the second waveguide arm.
